# EUROPÄISCHE PATENTSCHRIFT

(11) **EP 3 456 951 B1**
(45) Veröffentlichungstag und Bekanntmachung des Hinweises auf die Patenterteilung: **29.04.2020**
(21) Anmeldenummer: 18182335.2
(22) Anmeldetag: 09.07.2018
(51) Int. Cl.: F02M 25/025, F02M 25/022, F02B 47/02

(54) **WASSEREINSPRITZVORRICHTUNG MIT MINDESTENS ZWEI TANKS**
WATER INJECTION DEVICE WITH AT LEAST TWO TANKS
DISPOSITIF D'INJECTION D EAU POURVU D'AU MOINS DEUX RÉSERVOIRS

(30) Priorität: 07.09.2017 DE 102017215751
(43) Veröffentlichungstag der Anmeldung: 20.03.2019
(73) Patentinhaber: Robert Bosch GmbH, 70442 Stuttgart (DE)
(72) Erfinder: Bardoll, Albert, 71277 Rutesheim (DE); Gladel, Pascal, 70378 Stuttgart (DE); Schenk, Peter, 71640 Ludwigsburg (DE)

(56) Entgegenhaltungen:
- EP-A1- 3 018 331
- WO-A1-2016/177560
- WO-A1-2016/177561
- WO-A1-2018/162139
- DE-A1-102015 205 499
- DE-A1-102016 205 103
- DE-A1-102017 121 754
- US-B1- 7 013 845

## Beschreibung

### Stand der Technik

Die vorliegende Erfindung betrifft eine Wassereinspritzvorrichtung mit mehreren Wassertanks und genau einer einzigen Pumpeinrichtung.

Um eine Klopfneigung und eine Reduzierung von hohen Abgastemperaturen zu erreichen, ist es bekannt, bei Brennkraftmaschinen mittels einer Wassereinspritzvorrichtung Wasser in den Brennraum und/oder in einen Ansaugtrakt der Brennkraftmaschine einzuspritzen. Im Betrieb der Brennkraftmaschine muss hierbei sichergestellt werden, dass immer ausreichend Wasser zur Einspritzung vorhanden ist. Hierbei wäre es insbesondere bei einer Verwendung in Fahrzeugen vorteilhaft, wenn ein Nutzer des Fahrzeugs nicht gezwungen ist, selbst Wasser in den Wassertank nachzufüllen. Von daher muss ein notwendiger Wassertank möglichst groß ausgelegt werden. Dies birgt jedoch den Nachteil, dass hierfür im Fahrzeug häufig kein entsprechender Bauraum vorhanden ist.

Aus dem Stand der Technik sind Wassereinspritzvorrichtungen bekannt: z.B. WO 2016/177561 A1 offenbart ein Wassereinspritzsystem mit einem Tank und einer Pumpe, die in zwei Richtungen betrieben werden kann; WO 2016/177560A1 zeigt ein ähnliches System, darüber hinaus jedoch auch ein 2/2-Wege-Ventil zur Absperrung.

### Offenbarung der Erfindung

Die erfindungsgemäße Wassereinspritzvorrichtung mit den Merkmalen des Anspruchs 1 weist demgegenüber den Vorteil auf, dass eine deutlich größere Menge an Wasser, insbesondere in einem Fahrzeug, gespeichert werden kann, wobei sich ein baulicher Aufwand in Grenzen hält. Dies wird erfindungsgemäß dadurch erreicht, dass ein erster und ein zweiter Tank vorgesehen sind, um das Wasser zu speichern. Ferner ist wenigstens ein Wasserinjektor zum Einspritzen von Wasser in einen Brennraum oder in einen Ansaugtrakt einer Brennkraftmaschine vorgesehen. Der Wasserinjektor ist über eine erste Wasserleitung mit dem ersten Tank verbunden und über eine zweite Wasserleitung ist der zweite Tank mit der ersten Wasserleitung verbunden.

Ferner ist erfindungsgemäß genau eine einzige Pumpe vorgesehen, welche in der ersten Wasserleitung angeordnet ist. Diese einzige Pumpe ist als doppelt wirkende Pumpe ausgebildet. D.h., die Pumpe ist in zwei Richtungen betreibbar und kann somit die Förderrichtung umkehren. Hierdurch können erfindungsgemäß mehrere Tanks verwendet werden, obwohl nur genau eine einzige Pumpe notwendig ist. Dadurch können die Kosten für die Wassereinspritzvorrichtung trotz des Vorsehens von wenigstens zwei Wassertanks gering gehalten werden.

Die Unteransprüche zeigen bevorzugte Weiterbildungen der Erfindung.

Vorzugsweise sind in der ersten und der zweiten Wasserleitung jeweils ein erstes und zweites Absperrventil angeordnet. Hierdurch kann eine einfache Zuschaltung und Abschaltung des ersten oder zweiten Tanks ermöglicht werden.

Eine besonders einfache Ansteuerung der Tanks ist möglich, wenn die zweite Wasserleitung zwischen der Pumpe und dem ersten Tank in die erste Wasserleitung mündet. Hierdurch kann zum Entnehmen von Wasser die Pumpe für das Entnehmen von Wasser aus beiden Tanks jeweils in die gleiche Richtung betrieben werden. Zum Entleeren der ersten Wasserleitung und des Wasserinjektors wird die Pumpe dann entgegengesetzt betrieben.

Gemäß einer alternativen bevorzugten Ausgestaltung der Erfindung mündet die zweite Wasserleitung in die erste Wasserleitung in einem Bereich zwischen der Pumpe und dem Wasserinjektor. Hierdurch kann der zweite Tank als ausschließlicher Vorratstank verwendet werden und Wasser in Phasen, in welchen keine Wassereinspritzung erfolgt, vom zweiten Tank in den ersten Tank umgepumpt werden. Hierdurch kann der erste Tank als Haupttank betrieben werden und der zweite Tank ist ausschließlich ein Vorratstank, aus welchem nicht direkt zum Wasserinjektor gefördert wird.

Gemäß einer weiteren bevorzugten Ausgestaltung der Erfindung ist ferner eine Rückleitung vorgesehen, welche von der ersten Leitung von einem Bereich zwischen der Pumpe und dem Wasserinjektor abzweigt und zurück zum ersten Tank führt. Vorzugsweise ist in der Rückleitung ein Rückschlagventil angeordnet. Die Rückleitung kann dabei neben der Funktion des Zurückleitens von Wasser auch eine Funktion einer Förderlinie vom zweiten Tank zum ersten Tank übernehmen.

Statt der Absperrventile kann alternativ bevorzugt in der ersten Wasserleitung ein 3/2-Wegeventil angeordnet werden, wobei die zweite Wasserleitung vom zweiten Tank am 3/2-Wegeventil mündet. Somit sind statt zweier Absperrventile in der ersten und zweiten Wasserleitung nur ein einziges Wegeventil notwendig. Hierdurch kann insbesondere Bauraum eingespart werden. Das 3/2-Wegeventil ist hierbei zwischen der Pumpe und dem Wasserinjektor in der ersten Wasserleitung angeordnet.

Weiter bevorzugt umfasst die Wassereinspritzvorrichtung alternativ ein 3/3-Wegeventil, welches in der ersten Wasserleitung zwischen der Pumpe und dem Wasserinjektor angeordnet ist. Die zweite Wasserleitung vom zweiten Tank mündet dabei am 3/3-Wegeventil. Auch hierdurch kann ein Absperrventil zwischen der Pumpe und dem ersten Wassertank entfallen. Hierbei dient der zweite Tank ebenfalls nur als Vorratstank, so dass im aktiven Betrieb der Wassereinspritzung nur Wasser aus dem ersten Tank entnommen wird.

Weiter bevorzugt umfasst die Wassereinspritzvorrichtung einen dritten Tank und eine dritte Wasserleitung. Die dritte Wasserleitung verbindet den dritten Tank mit der ersten Wasserleitung. Hierdurch kann ein noch größeres Wasservolumen durch Vorsehen des dritten Tanks erhalten werden, wobei trotzdem nur eine einzige doppelt wirkende Pumpe notwendig ist.

Vorzugsweise ist in der dritten Wasserleitung ein drittes Absperrventil angeordnet. Alternativ ist ein zweites 3/2-Wegeventil vorgesehen, welches in der ersten Wasserleitung zwischen der Pumpe und dem Wasserinjektor angeordnet ist und an welchem die dritte Wasserleitung vom dritten Tank mündet.

Weiter alternativ ist ein zweites 3/2-Wegeventil vorgesehen, welches in der ersten Wasserleitung zwischen der Pumpe und dem Wasserinjektor angeordnet ist und an welchem die dritte Wasserleitung mündet.

Weiter bevorzugt umfasst die Wassereinspritzvorrichtung eine Steuereinheit zur Steuerung der Ventile und der Pumpe, wobei die Steuereinheit eingerichtet ist, die Ventile und die Pumpe in Abhängigkeit eines Betriebszustandes der Brennkraftmaschine zu steuern.

Besonders bevorzugt ist die Steuereinheit eingerichtet, die Ventile und die Pumpe derart zu steuern, dass eine Fluidströmung vom ersten Tank zum zweiten Tank oder umgekehrt erfolgt, wenn sich die Brennkraftmaschine im Leerlauf befindet oder im Teillastbereich befindet oder im Stillstand befindet.

Vorzugsweise wird dem ersten Tank ein Kondensat aus einer Klimaanlage des Fahrzeugs zugeführt. Wenn hierbei der erste Tank einen vorbestimmten Füllstand erreicht, d.h., insbesondere wenn er vollständig gefüllt ist, ist die Steuereinheit eingerichtet, Wasser aus dem ersten Tank in den zweiten Tank umzupumpen, wenn der zweite Tank nicht vollständig gefüllt ist. Hierdurch kann dann im ersten Tank weiter Kondensat aus der Klimaanlage oder auch aus einer anderen Quelle weiter gesammelt werden. Ein weiterer Vorteil des Umpumpens liegt darin, dass am Fahrzeug zur Wasserbefüllung nur ein Einfüllstutzen oder dgl. vorgesehen werden muss, um einem Nutzer des Fahrzeugs nicht zuzumuten, zwei oder drei Tanks unabhängig voneinander zu befüllen.

Ferner betrifft die vorliegende Erfindung eine Brennkraftmaschine eines Fahrzeugs, umfassend eine erfindungsgemäße Wassereinspritzvorrichtung. Der Wasserinjektor der Wassereinspritzvorrichtung ist hierbei bevorzugt an einer Brennkammer angeordnet, um Wasser direkt in den Brennraum einzuspritzen und/oder der Wasserinjektor ist an einem Ansaugtrakt der Brennkraftmaschine, insbesondere einem Saugrohr, angeordnet.

### Zeichnung

Nachfolgend werden bevorzugte Ausführungsbeispiele der Erfindung unter Bezugnahme auf die begleitende Zeichnung im Detail beschrieben. Gleiche bzw. funktional gleiche Teile sind dabei mit den gleichen Bezugszeichen bezeichnet. In der Zeichnung ist:
- Figur 1: eine schematische Ansicht einer Wassereinspritzvorrichtung einer Brennkraftmaschine gemäß einem ersten Ausführungsbeispiel der Erfindung,
- Figur 2: eine schematische Ansicht einer Wassereinspritzvorrichtung einer Brennkraftmaschine gemäß einem zweiten Ausführungsbeispiel der Erfindung,
- Figur 3: eine schematische Ansicht einer Wassereinspritzvorrichtung einer Brennkraftmaschine gemäß einem dritten Ausführungsbeispiel der Erfindung,
- Figur 4: eine schematische Ansicht einer Wassereinspritzvorrichtung einer Brennkraftmaschine gemäß einem vierten Ausführungsbeispiel der Erfindung,
- Figur 5: eine schematische Ansicht einer Wassereinspritzvorrichtung einer Brennkraftmaschine gemäß einem fünften Ausführungsbeispiel der Erfindung,
- Figur 6: eine schematische Ansicht einer Wassereinspritzvorrichtung einer Brennkraftmaschine gemäß einem sechsten Ausführungsbeispiel der Erfindung,
- Figur 7: eine schematische Ansicht einer Wassereinspritzvorrichtung einer Brennkraftmaschine gemäß einem siebten Ausführungsbeispiel der Erfindung,
- Figur 8: eine schematische Ansicht einer Wassereinspritzvorrichtung einer Brennkraftmaschine gemäß einem achten Ausführungsbeispiel der Erfindung, und
- Figur 9: eine schematische Ansicht einer Wassereinspritzvorrichtung einer Brennkraftmaschine gemäß einem neunten Ausführungsbeispiel der Erfindung.

### Bevorzugte Ausführungsformen der Erfindung

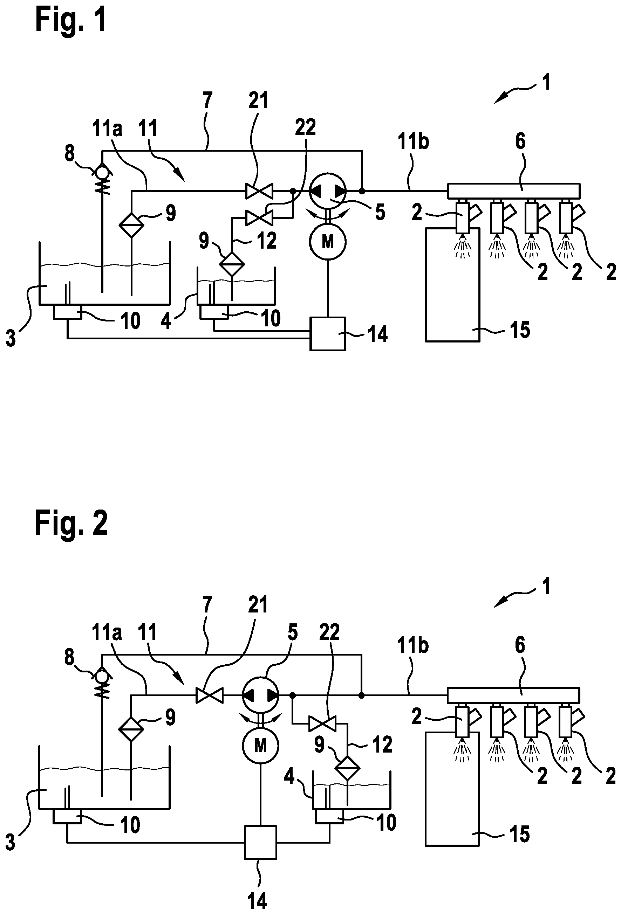

Figur 1 zeigt eine Wassereinspritzvorrichtung 1 gemäß einem ersten bevorzugten Ausführungsbeispiel der Erfindung.

Wie aus Figur 1 ersichtlich ist, umfasst die Wassereinspritzvorrichtung 1 mehrere Wasserinjektoren 2, welche an einem Wasserrail 6 angeordnet sind. Schematisch in Figur 1 dargestellt ist bei einem Wasserinjektor 2 eine Direkteinspritzung von Wasser in einen Brennraum 15. Es sei jedoch angemerkt, dass die Einspritzung von Wasser auch in einen Ansaugtrakt einer Brennkraftmaschine möglich ist oder sowohl direkt in einen Brennraum als auch in einen Ansaugtrakt der Brennkraftmaschine.

Die Wassereinspritzvorrichtung 1 umfasst ferner einen ersten Tank 3 und einen zweiten Tank 4 zur Speicherung von Wasser. Der erste Tank 3 ist über eine erste Wasserleitung 1 mit dem Wasserrail 6 verbunden. Der zweite Tank 4 ist über eine zweite Wasserleitung 12 mit der ersten Wasserleitung 11 verbunden.

Ferner ist eine einzige doppelwirkende Pumpe 5 in der ersten Wasserleitung 11 angeordnet. Die doppelt wirkende Pumpe hat, wie in Figur 1 schematisch angedeutet, die Funktion, dass eine Förderung in eine erste Richtung und umgekehrt in eine zweite Richtung möglich ist. Dies ist durch den Doppelpfeil in Figur 1 angedeutet. Die doppelwirkende Pumpe 5 wird mittels eines Motors 5 angetrieben.

Wie weiter aus Figur 1 ersichtlich ist, unterteilt die Pumpe 5 die erste Wasserleitung 11 in einen ersten Bereich 11a und einen zweiten Bereich 11b. Die zweite Wasserleitung 12 mündet dabei in den ersten Bereich 11a der ersten Wasserleitung 11.

Ferner sind im ersten Bereich 11a der ersten Wasserleitung 11 ein erstes Absperrventil 21 und in der zweiten Wasserleitung 12 ein zweites Absperrventil 22 angeordnet.

In der ersten und zweiten Wasserleitung 11, 12 ist ferner jeweils noch ein Filter 9 angeordnet, um das Wasser, welches den Wasserinjektoren 2 zugeführt wird, zu filtern.

Vom zweiten Bereich 11b der ersten Wasserleitung 11 geht weiterhin eine Rückleitung 7 zurück in den ersten Tank 3. In der Rückleitung 7 ist dabei ein Rückschlagventil 8 angeordnet. Die Rückleitung 7 dient einerseits zur Rückführung von Wasser aus dem zweiten Bereich 11b und dem Wasserrail 6 sowie auch zum Umpumpen von Wasser aus dem zweiten Tank 4 in den ersten Tank 3.

Am ersten Tank 3 und am zweiten Tank 4 ist jeweils eine Sensoranordnung 10 angeordnet. Die Sensoranordnung 10 umfasst bevorzugt einen Wasserstandsensor, Wasserqualitätssensor und einen Temperatursensor.

Ferner ist eine Steuereinheit 14 vorgesehen, welche mit den Sensoranordnungen 10 der beiden Tanks 3, 4 sowie einem Motor M zum Antreiben der Pumpe 5 verbunden ist. Die Steuereinheit 14 ist ferner noch mit dem ersten und zweiten Absperrventil 21, 22 verbunden, was aus Übersichtlichkeitsgründen in Figur 1 nicht dargestellt ist.

Ferner können in der ersten und zweiten Wasserleitung noch Drucksensoren angeordnet sein, welche mit der Steuereinheit 14 verbunden sind, um ein vorbestimmtes Druckniveau im Wasserrail 6 sicherzustellen.

Die Wassereinspritzvorrichtung 1 des ersten Ausführungsbeispiels weist somit genau zwei Tanks auf und genau eine doppelt wirkende Pumpe 5 auf.

Die Funktion der Wassereinspritzvorrichtung 1 ist dabei wie folgt: Im Betrieb der Brennkraftmaschine wird Wasser über die Wasserinjektoren 2 eingespritzt. Hierbei sind im Ausgangszustand üblicherweise der erste und zweite Tank 3, 4 mit Wasser gefüllt. Für den normalen Betrieb kann somit die Steuereinheit 14 das erste Absperrventil 21 öffnen und das zweite Absperrventil 22 schließen. Bei Betreiben der Pumpe 5 wird dann Wasser aus dem ersten Tank 3 über die erste Wasserleitung 11 zum Wasserrail 6 zugeführt und von dort in die Brennräume 15 eingespritzt. Sollte ein Wasserstand im ersten Tank 3 unter einen vorbestimmten Wert sinken, ist die Steuereinheit 14 eingerichtet, die Wassereinspritzvorrichtung auf den zweiten Tank 4 umzuschalten. Hierzu wird das erste Absperrventil 21 geschlossen und das zweite Absperrventil 22 geöffnet. Die Pumpe 5 wird dabei in gleicher Richtung wie beim Ansaugen von Wasser aus dem ersten Tank 3 betrieben. Somit kann dann Wasser aus dem zweiten Tank 4 entnommen werden.

Weiterhin kann mittels der Wassereinspritzvorrichtung 1 auch eine Förderung vom zweiten Tank 4 in den ersten Tank 3 ermöglicht werden. Hierzu kann die Steuereinheit 14 in Abhängigkeit von einem Zustand der Brennkraftmaschine eine Förderung vom zweiten Tank 4 in den ersten Tank 3 ausführen. Hierzu ist das erste Absperrventil 21 geschlossen und das zweite Absperrventil 22 geöffnet. Wenn sich die Brennkraftmaschine beispielsweise im Leerlauf oder in Teillast befindet oder die Brennkraftmaschine abgestellt ist, kann durch Betreiben der Pumpe 5 und bei geöffnetem zweiten Absperrventil 22 Wasser aus dem zweiten Tank 4 in die erste Wasserleitung 11 und von der ersten Wasserleitung über die Rückleitung 7 in den ersten Tank 3 gefördert werden.

Um einem Nutzer eines Fahrzeugs, in welchem die erfindungsgemäße Wassereinspritzvorrichtung bevorzugt verwendet wird, die Handhabung möglichst einfach zu machen, ist bevorzugt nur ein Wassereinfüllstutzen am Fahrzeug vorgesehen. Weiterhin wird bevorzugt auch Wasser aus dem Normalbetrieb des Fahrzeugs, beispielsweise als Kondensat aus einer Klimaanlage des Fahrzeugs, gewonnen und einem der beiden Tanks 3, 4 zugeführt.

Die Pumpe 5 ist als doppeltwirkende Pumpe ausgebildet und kann auch in umgekehrter Richtung, d.h., eine Förderung vom zweiten Bereich 11b zurück in Richtung des ersten Bereichs 11a der ersten Wasserleitung 11, betrieben werden. Hierdurch kann beispielsweise bei einem Abstellen des Fahrzeugs der zweite Bereich 11b sowie das Wasserrail 6 und die Wasserinjektoren 2 leergesaugt werden, um beispielsweise im Winter ein Gefrieren von Wasser in diesen Bauteilen zu vermeiden. Vorzugsweise ist hierbei auch eine Heizeinrichtung zumindest im ersten Tank 3 vorgesehen, um auch im Winter einen flüssigen Aggregatszustand des im ersten Tank 3 gespeicherten Wassers sicherzustellen. Bei abgestellten Fahrzeugen sind das erste und zweite Absperrventil 21, 22 ebenfalls geschlossen, um einen Flutungsschutz der Pumpe 5 sowie der Wasserinjektoren bereitzustellen.

Figur 2 zeigt ein zweites Ausführungsbeispiel einer Wassereinspritzvorrichtung 1, welches im Wesentlichen dem ersten Ausführungsbeispiel entspricht. Im Unterschied zum ersten Ausführungsbeispiel ist beim zweiten Ausführungsbeispiel die zweite Wasserleitung 12 derart angeordnet, dass die zweite Wasserleitung 12 in den zweiten Bereich 11b der ersten Wasserleitung 11 mündet. Im normalen Betrieb wird die Pumpe 5 in die erste Richtung betrieben, so dass Wasser aus dem ersten Tank 3 in Richtung zum Wasserrail 6 gefördert wird. Im Umschaltbetrieb wird die Pumpe 5 in die entgegengesetzte Richtung betrieben und die beiden Absperrventile 21, 22 geöffnet, so dass Wasser aus dem zweiten Tank 4 in den ersten Tank 3 umgepumpt werden kann. Dies wird insbesondere dann vorgenommen, wenn sich die Brennkraftmaschine im Leerlauf oder in der Teillast oder im Stillstand befindet. Weiterhin kann auch Wasser aus dem ersten Tank 3 in den zweiten Tank 4 umgepumpt werden. Ebenso kann selbstverständlich Wasser aus dem zweiten Tank 4 in den ersten Tank 3 gepumpt werden.

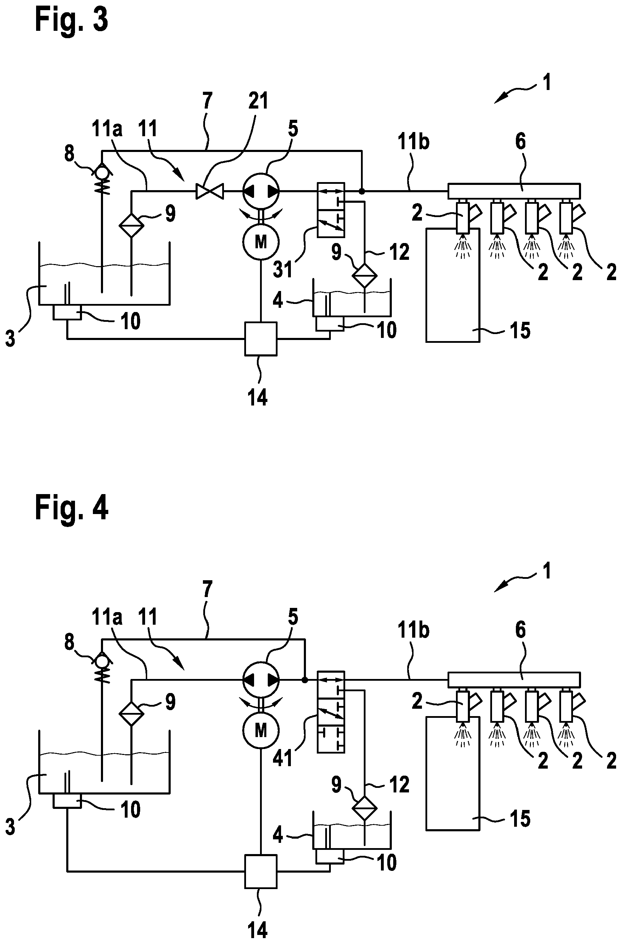

Figur 3 zeigt eine Wassereinspritzvorrichtung 1 gemäß einem dritten Ausführungsbeispiel der Erfindung. Das dritte Ausführungsbeispiel entspricht im Wesentlichen dem zweiten Ausführungsbeispiel, wobei statt des zweiten Absperrventils 22 beim dritten Ausführungsbeispiel eine erstes 3/2-Wegeventil vorgesehen ist. Hierbei mündet die zweite Wasserleitung 12 am 3/2-Wegeventil 31. Wie aus Figur 3 ersichtlich ist, ist in der ersten Stellung des 3/2-Wegeventils 31 eine Verbindung zwischen der Pumpe 5 und dem Wasserrail 6 hergestellt. Figur 3 zeigt diese Stellung des 3/2-Wegeventils 31. In der zweiten Stellung ist eine Verbindung zwischen der Pumpe 5 und dem zweiten Tank 4 hergestellt. Hierdurch kann ein Umpumpen von Wasser vom zweiten Tank 4 in den ersten Tank 3 erfolgen oder umgekehrt ein Umpumpen von Wasser vom ersten Tank 3 in den zweiten Tank 4. Hauptsächlich dient jedoch der zweite Tank 4 in diesem Ausführungsbeispiel als Zusatztank zur Versorgung oder zum Ausgleich des als Haupttank ausgebildeten ersten Tanks 3. Im normalen Betrieb wird der erste Tank 3 als Tank zur Wassereinspritzung verwendet und die Pumpe 5 wird in der Förderrichtung vom ersten Tank 3 in Richtung zum Wasserrail 6 und den Wasserinjektoren 2 betrieben. Zum Umpumpen wird die Förderrichtung der Pumpe 5 umgekehrt und das 3/2-Wegeventil umgeschaltet, so dass dann Wasser vom zweiten Tank 4 in den ersten Tank 3 umgepumpt werden kann.

Figur 4 zeigt eine Wassereinspritzvorrichtung 1 gemäß einem vierten Ausführungsbeispiel der Erfindung. Dieses Ausführungsbeispiel entspricht im Wesentlichen dem dritten Ausführungsbeispiel, wobei statt des 3/2-Wegeventils beim vierten Ausführungsbeispiel ein 3/3-Wegeventil 41 vorgesehen ist. Das 3/3-Wegeventil 41 weist hierbei eine dritte Stellung auf, in welcher eine Verbindung zwischen dem Wasserrail 6 und der Pumpe 5 bzw. der zweiten Wasserleitung 12 unterbunden ist. Die erste und zweite Stellung entsprechen dabei den Ventilstellungen beim 3/2-Wegeventil 31 von Figur 3. Hierbei kann insbesondere die dritte Stellung des 3/3-Wegeventils 41 dazu verwendet werden, in einem Fall eines Stillstandes bzw. Abstellen der Brennkraftmaschine als Flutungsschutz der Pumpe 5 und zum Druck-Halten zu dienen. Wie aus Figur 4 ersichtlich ist, zweigt die Rückleitung 7 beim vierten Ausführungsbeispiel von der ersten Wasserleitung 11 in einen Bereich zwischen der Pumpe 5 und dem 3/3-Wegeventil 41 ab.

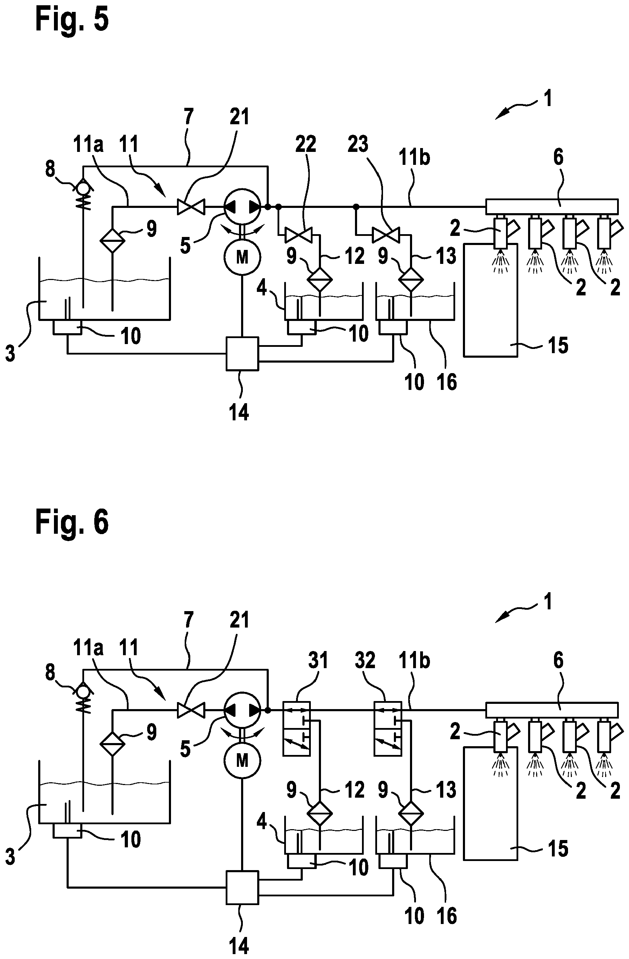

Figur 5 zeigt eine Wassereinspritzvorrichtung 1 gemäß einem fünften Ausführungsbeispiel der Erfindung. Im Unterschied zu den vorhergehenden Ausführungsbeispielen weist das fünfte Ausführungsbeispiel neben dem ersten und zweiten Tank 3, 4 noch einen dritten Tank 16 auf. Der dritte Tank 16 ist über eine dritte Wasserleitung 13 mit der ersten Wasserleitung 11 verbunden. Genauer mündet die dritte Wasserleitung 13 im zweiten Bereich 11b der ersten Wasserleitung 11. Ebenso mündet die zweite Wasserleitung 12 des zweiten Tanks 4 im zweiten Bereich 11b der ersten Wasserleitung 11. Ein drittes Absperrventil 23 ist in der dritten Wasserleitung 13 angeordnet und mit der Steuereinheit 14 verbunden. Somit können der zweite Tank 4 und der dritte Tank 16 als Zusatztanks dienen und jeweils über die separaten Absperrventile 22, 23 so zugeschaltet werden, dass bei Umkehrung der Förderrichtung der Pumpe 5 Wasser aus dem zweiten bzw. dritten Tank 4, 16 in den ersten Tank 3 zurückgefördert werden kann. Auch kann die umgekehrte Förderrichtung vom ersten Tank 3 zum zweiten Tank 4 oder vom ersten Tank 3 zum dritten Tank 16 zur Auffüllung der Zusatztanks genutzt werden. Je nach Pumpenauslegung kann dieser Transfer von Wasser vom ersten Tank 3 zum zweiten Tank 4 oder zum dritten Tank 16 auch bei aktiver Wassereinspritzung ermöglicht werden. Somit weist das fünfte Ausführungsbeispiel genau drei Tanks und genau drei Absperrventile auf.

Figur 6 zeigt eine Wassereinspritzvorrichtung gemäß einem sechsten Ausführungsbeispiel der Erfindung. Das sechste Ausführungsbeispiel entspricht im Wesentlichen dem fünften Ausführungsbeispiel und umfasst ebenfalls genau drei Tanks. Im Unterschied zum fünften Ausführungsbeispiel ist beim sechsten Ausführungsbeispiel jedoch statt des zweiten und dritten Absperrventils ein erstes 3/2-Wegeventil 31 und zweites 3/2-Wegeventil 32 vorgesehen. Wie aus Figur 6 ersichtlich ist, mündet die zweite Wasserleitung 12 am ersten 3/2-Wegeventil 31. Die dritte Wasserleitung 13 mündet am zweiten 3/2-Wegeventil 32. Die Umschaltung der beiden 3/2-Wegeventile 31, 32 erfolgt dabei wie im dritten Ausführungsbeispiel von Figur 3 beschrieben.

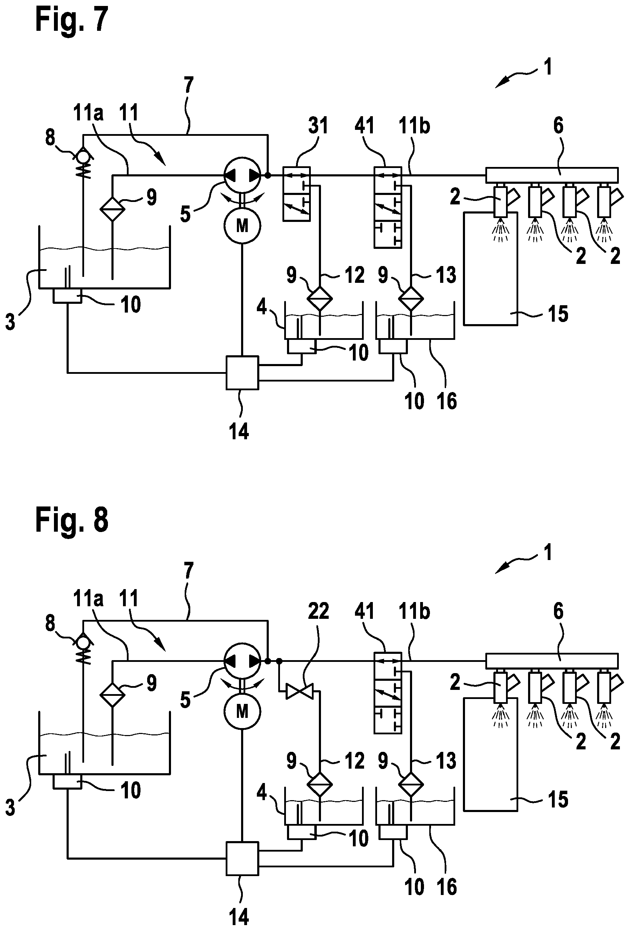

Figur 7 zeigt ein siebtes Ausführungsbeispiel der Erfindung, welches im Wesentlichen dem sechsten Ausführungsbeispiel entspricht. Im Unterschied zum sechsten Ausführungsbeispiel ist beim siebten Ausführungsbeispiel jedoch statt des zweiten 3/2-Wegeventils ein 3/3-Wegeventil 41 vorgesehen, an welchem die dritte Wasserleitung 13 mündet. Die zweite Wasserleitung 12 mündet wie beim sechsten Ausführungsbeispiel am ersten 3/2-Wegeventil 31. Hierbei ist kein Absperrventil oder ein anderes Ventil im ersten Bereich 11a der ersten Wasserleitung 11 angeordnet.

Figur 8 zeigt eine Wassereinspritzvorrichtung gemäß einem achten Ausführungsbeispiel der Erfindung. Das achte Ausführungsbeispiel entspricht dem siebten Ausführungsbeispiel, wobei anstatt des ersten 3/2-Wegeventils an der zweiten Wasserleitung 12 in der zweiten Wasserleitung 12 ein zweites Absperrventil 22 angeordnet ist.

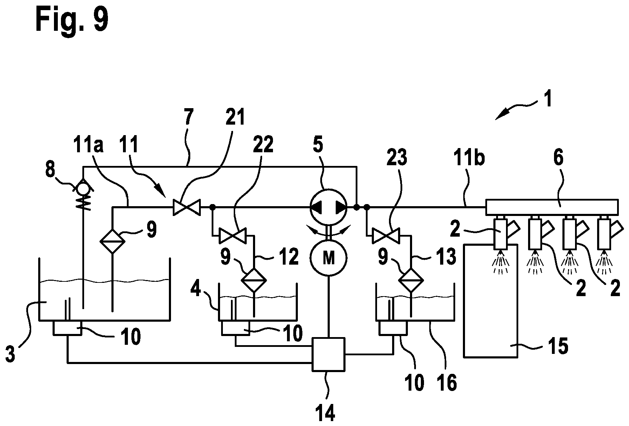

Figur 9 zeigt eine Wassereinspritzvorrichtung 1 gemäß einem neunten Ausführungsbeispiel der Erfindung. Das neunte Ausführungsbeispiel weist ebenfalls genau drei Tanks 3, 4 und 16 auf. Wie in Figur 9 gezeigt, mündet die dritte Wasserleitung 13 in den zweiten Bereich 11b zwischen der Pumpe 5 und dem Wasserrail 6. Die zweite Wasserleitung 12 mündet in den ersten Bereich 11a der ersten Wasserleitung 11 in einen Abschnitt zwischen der Pumpe 5 und dem ersten Absperrventil 21. In der zweiten Wasserleitung 12 ist ein zweites Absperrventil 22 angeordnet und in der dritten Wasserleitung 13 ist ein drittes Absperrventil 23 angeordnet. Alle Absperrventile sowie der Motor M der Pumpe 5 werden durch die Steuereinheit 14 angesteuert. Durch ein entsprechendes Öffnen und Schließen der drei Absperrventile 21, 22 und 23 kann somit Wasser vom ersten Tank 3 in den zweiten Tank 4 oder den dritten Tank 16 gefördert werden oder vom zweiten Tank 4 über die Rückleitung 7 in den ersten Tank 3 oder vom dritten Tank 16 über die Pumpe 5 und den ersten Bereich 11a der ersten Wasserleitung 11 in den ersten Tank 3. Auch kann Wasser vom dritten Tank 16 in den zweiten Tank 4 gefördert werden, insbesondere, wenn die Brennkraftmaschine keine Wassereinspritzung benötigt, beispielsweise im Leerlauf oder bei Teillast oder bei Stillstand. Ferner kann der zweite Tank 4 auch zur Versorgung der Wasserinjektoren 2 mit Wasser verwendet werden. Hierbei ist dann das erste Absperrventil 21 geschlossen, so dass Wasser aus dem zweiten Tank 4 zu den Wasserinjektoren 2 gefördert werden kann. Wenn keine Wassereinspritzung erfolgt, beispielsweise bei einem Stillstand der Brennkraftmaschine, und ein Druck im Wasserrail 6 über einen vorbestimmten Schwellenwert ansteigt, wird das Wasser über die Rückleitung 7 zurück in den ersten Tank 3 gefördert.

## Patentansprüche

1. Wassereinspritzvorrichtung (1) einer Brennkraftmaschine, umfassend:
- mindestens einen ersten Wasserinjektor (2) zum Einspritzen von Wasser,
- einen ersten Tank (3) zur Speicherung von Wasser,
- einen zweiten Tank (4) zur Speicherung von Wasser,
- eine erste Wasserleitung (11) vom ersten Tank (3) zum Wasserinjektor (2),
- eine zweite Wasserleitung (12) vom zweiten Tank (4) zur ersten Wasserleitung (11), und
- genau eine einzige Pumpe (5), welche in der ersten Wasserleitung (11) angeordnet ist,
- wobei die einzige Pumpe (5) als doppelt wirkende Pumpe ausgebildet ist, welche in eine erste Richtung und eine zweite Richtung entgegengesetzt zur ersten Richtung fördern kann.

2. Wassereinspritzvorrichtung nach Anspruch 1, wobei in der ersten Wasserleitung (11) ein erstes Absperrventil (21) angeordnet ist und in der zweiten Wasserleitung (12) ein zweites Absperrventil (22) angeordnet ist.

3. Wassereinspritzvorrichtung nach Anspruch 2, wobei die zweite Wasserleitung (12) zwischen der Pumpe (5) und dem ersten Tank (3) in die erste Wasserleitung (11) mündet.

4. Wassereinspritzvorrichtung nach Anspruch 2, wobei die zweite Wasserleitung (12) zwischen der Pumpe (5) und dem Wasserinjektor (2) in die erste Wasserleitung (11) mündet.

5. Wassereinspritzvorrichtung nach einem der vorhergehenden Ansprüche, ferner umfassend eine Rückleitung (7), welche von der ersten Leitung (11) von einem Bereich (11b) zwischen der Pumpe und dem Wasserinjektor (2) abzweigt und zum ersten Tank (3) zurückführt.

6. Wassereinspritzvorrichtung nach Anspruch 1, wobei in der ersten Leitung (11) ein 3/2-Wegeventil (31) angeordnet ist, wobei die zweite Wasserleitung (12) am 3/2-Wegeventil mündet, wobei das 3/2-Wegeventil zwischen der Pumpe (5) und dem Wasserinjektor (2) angeordnet ist und in einer ersten Stellung eine Verbindung zwischen der Pumpe und dem Wasserinjektor bereitstellt und in einer zweiten Stellung eine Verbindung zwischen der Pumpe (5) und dem zweiten Tank (4) bereitstellt.

7. Wassereinspritzvorrichtung nach Anspruch 1, ferner umfassend ein 3/3-Wegeventil (41), welches in der ersten Wasserleitung (11) zwischen der Pumpe (5) und dem Wasserinjektor (2) angeordnet ist und in einer ersten Stellung eine Verbindung zwischen der Pumpe (5) und dem Wasserinjektor bereitstellt, in einer zweiten Stellung eine Verbindung zwischen der Pumpe und dem zweiten Tank (4) bereitstellt und in einer dritten Stellung alle am 3/3-Wegeventil anstehenden Leitungen schließt.

8. Wassereinspritzvorrichtung nach einem der vorhergehenden Ansprüche, ferner umfassend einen dritten Tank (16) und eine dritte Wasserleitung (13), welche den dritten Tank (16) mit der ersten Wasserleitung (11) verbindet.

9. Wassereinspritzvorrichtung nach Anspruch 8, wobei in der dritten Wasserleitung (13) ein drittes Absperrventil (23) angeordnet ist.

10. Wassereinspritzvorrichtung nach Anspruch 8, ferner umfassend ein zweites 3/2-Wegeventil, welches in der ersten Wasserleitung (11) zwischen der Pumpe (5) und dem Wasserinjektor (2) angeordnet ist und an welchem die dritte Wasserleitung (13) mündet.

11. Wassereinspritzvorrichtung nach Anspruch 8, ferner umfassend ein zweites 3/3-Wegeventil (41), welches in der ersten Wasserleitung (11) zwischen der Pumpe (5) und dem Wasserinjektor (2) angeordnet ist und an welchem die dritte Wasserleitung (13) mündet.

12. Wassereinspritzvorrichtung nach einem der vorhergehenden Ansprüche, ferner umfassend eine Steuereinheit (14) zur Steuerung der Absperrventil und/oder Wegeventile und/oder eines Motors (M) zum Antreiben der Pumpe (5), wobei die Steuereinheit eingerichtet ist, die Steuerung in Abhängigkeit eines Betriebszustandes der Brennkraftmaschine vorzunehmen.

13. Wassereinspritzvorrichtung nach Anspruch 12, wobei die Steuereinheit (14) eingerichtet ist, die Steuerung derart vorzunehmen, dass eine Fluidströmung vom ersten Tank (3) zum zweiten Tank (4) oder umgekehrt erfolgt, wenn sich die Brennkraftmaschine im Leerlauf oder im Teillastbereich oder im Stillstand befindet.

14. Brennkraftmaschine eines Fahrzeugs, umfassend eine Wassereinspritzvorrichtung nach einem der vorhergehenden Ansprüche, wobei die Wassereinspritzvorrichtung direkt in einen Brennraum (15) und/oder in ein Saugrohr erfolgt.

## Claims

1. Water injection device (1) of an internal combustion engine, comprising:
- at least one first water injector (2) for injecting water,
- a first tank (3) for storing water,
- a second tank (4) for storing water,
- a first water line (11) from the first tank (3) to the water injector (2),
- a second water line (12) from the second tank (4) to the first water line (11), and
- exactly one single pump (5), which is arranged in the first water line (11),
- wherein the single pump (5) is designed as a double-acting pump which can convey in a first direction and in a second direction opposite to the first direction.

2. Water injection device according to Claim 1, wherein a first shut-off valve (21) is arranged in the first water line (11), and a second shut-off valve (22) is arranged in the second water line (12).

3. Water injection device according to Claim 2, wherein the second water line (12) opens into the first water line (11) between the pump (5) and the first tank (3).

4. Water injection device according to Claim 2, wherein the second water line (12) opens into the first water line (11) between the pump (5) and the water injector (2).

5. Water injection device according to any of the preceding claims, furthermore comprising a return line (7) which branches off from the first line (11) from a region (11b) between the pump and the water injector (2) and which leads back to the first tank (3).

6. Water injection device according to Claim 1, wherein a 3/2 directional valve (31) is arranged in the first line (11), wherein the second water line (12) opens out at the 3/2 directional valve, wherein the 3/2 directional valve is arranged between the pump (5) and the water injector (2) and, in a first position, provides a connection between the pump and the water injector and, in a second position, provides a connection between the pump (5) and the second tank (4).

7. Water injection device according to Claim 1, furthermore comprising a 3/3 directional valve (41), which is arranged in the first water line (11) between the pump (5) and the water injector (2) and which, in a first position, provides a connection between the pump (5) and the water injector, in a second position, provides a connection between the pump and the second tank (4) and, in a third position, closes all lines present at the 3/3 directional valve.

8. Water injection device according to any of the preceding claims, furthermore comprising a third tank (16) and a third water line (13) which connects the third tank (16) to the first water line (11).

9. Water injection device according to Claim 8, wherein a third shut-off valve (23) is arranged in the third water line (13).

10. Water injection device according to Claim 8, furthermore comprising a second 3/2 directional valve, which is arranged in the first water line (11) between the pump (5) and the water injector (2) and at which the third water line (13) opens out.

11. Water injection device according to Claim 8, furthermore comprising a second 3/3 directional valve (41), which is arranged in the first water line (11) between the pump (5) and the water injector (2) and at which the third water line (13) opens out.

12. Water injection device according to any of the preceding claims, furthermore comprising a control unit (14) for controlling the shut-off valve and/or directional valves and/or a motor (M) for driving the pump (5), wherein the control unit is configured to perform the control in a manner dependent on an operating state of the internal combustion engine.

13. Water injection device according to Claim 12, wherein the control unit (14) is configured to perform the control such that a fluid flow takes place from the first tank (3) to the second tank (4) or vice versa when the internal combustion engine is at idle or in the part-load range or at a standstill.

14. Internal combustion engine of a vehicle, comprising a water injection device according to any of the preceding claims, wherein the water injection device is performed directly into a combustion chamber (15) and/or into an intake pipe.

## Revendications

1. Dispositif d'injection d'eau (1) d'un moteur à combustion interne, comprenant :
- au moins un premier injecteur d'eau (2) pour injecter de l'eau,
- un premier réservoir (3) pour stocker de l'eau ;
- un deuxième réservoir (4) pour stocker de l'eau,
- une première conduite d'eau (11) allant du premier réservoir (3) à l'injecteur d'eau (2),
- une deuxième conduite d'eau (12) allant du deuxième réservoir (4) à la première conduite d'eau (11), et
- exactement une pompe unique (5) qui est disposée dans la première conduite d'eau (11),
- la pompe unique (5) étant réalisée sous forme de pompe à double action, qui peut refouler dans une première direction et dans une deuxième direction opposée à la première direction.

2. Dispositif d'injection d'eau selon la revendication 1, dans lequel une première vanne d'arrêt (21) est disposée dans la première conduite d'eau (11) et une deuxième vanne d'arrêt (22) est disposée dans la deuxième conduite d'eau (12).

3. Dispositif d'injection d'eau selon la revendication 2, dans lequel la deuxième conduite d'eau (12) débouche entre la pompe (5) et le premier réservoir (3) dans la première conduite d'eau (11).

4. Dispositif d'injection d'eau selon la revendication 2, dans lequel la deuxième conduite d'eau (12) débouche entre la pompe (5) et l'injecteur d'eau (2) dans la première conduite d'eau (11).

5. Dispositif d'injection d'eau selon l'une quelconque des revendications précédentes, comprenant en outre une conduite de retour (7) qui part de la première conduite d'eau (11) depuis une région (11b) entre la pompe et l'injecteur d'eau (2) et qui retourne au premier réservoir (3).

6. Dispositif d'injection d'eau selon la revendication 1, dans lequel une soupape à 3/2 voies (31) est disposée dans la première conduite d'eau (11), la deuxième conduite d'eau (12) débouchant au niveau de la soupape à 3/2 voies, la soupape à 3/2 voies étant disposée entre la pompe (5) et l'injecteur d'eau (2) et, dans une première position, établissant une connexion entre la pompe et l'injecteur d'eau, et dans une deuxième position, établissant une connexion entre la pompe (5) et le deuxième réservoir (4).

7. Dispositif d'injection d'eau selon la revendication 1, comprenant en outre une soupape à 3/3 voies (41) qui est disposée dans la première conduite d'eau (11) entre la pompe (5) et l'injecteur d'eau (2) et qui, dans une première position, établit une connexion entre la pompe (5) et l'injecteur d'eau, dans une deuxième position, établit une connexion entre la pompe et le deuxième réservoir (4), et dans une troisième position, ferme toutes les conduites raccordées à la soupape à 3/3 voies.

8. Dispositif d'injection d'eau selon l'une quelconque des revendications précédentes, comprenant en outre un troisième réservoir (16) et une troisième conduite d'eau (13) qui relie le troisième réservoir (16) à la première conduite d'eau (11).

9. Dispositif d'injection d'eau selon la revendication 8, dans lequel une troisième vanne d'arrêt (23) est disposée dans la troisième conduite d'eau (13).

10. Dispositif d'injection d'eau selon la revendication 8, comprenant en outre une deuxième soupape à 3/2 voies qui est disposée dans la première conduite d'eau (11) entre la pompe (5) et l'injecteur d'eau (2) et au niveau de laquelle débouche la troisième conduite d'eau (13).

11. Dispositif d'injection d'eau selon la revendication 8, comprenant en outre une deuxième soupape à 3/3 voies (41) qui est disposée dans la première conduite d'eau (11) entre la pompe (5) et l'injecteur d'eau (2) et au niveau de laquelle débouche la troisième conduite d'eau (13).

12. Dispositif d'injection d'eau selon l'une quelconque des revendications précédentes, comprenant en outre une unité de commande (14) pour commander la vanne d'arrêt et/ou les soupapes de distribution et/ou un moteur (M) pour entraîner la pompe (5), l'unité de commande étant prévue pour effectuer la commande en fonction d'un état de fonctionnement du moteur à combustion interne.

13. Dispositif d'injection d'eau selon la revendication 12, dans lequel l'unité de commande (14) est prévue pour effectuer la commande de telle sorte qu'un écoulement de fluide se produise depuis le premier réservoir (3) jusqu'au deuxième réservoir (4) ou inversement lorsque le moteur à combustion interne se trouve en marche à vide ou dans une plage de charge partielle ou à l'arrêt.

14. Moteur à combustion interne d'un véhicule, comprenant un dispositif d'injection d'eau selon l'une quelconque des revendications précédentes, le dispositif d'injection d'eau étant effectué directement dans une chambre de combustion (15) et/ou dans un conduit d'admission.
